# EUROPEAN PATENT SPECIFICATION

(11) **EP 1 999 865 B1**
(45) Date of publication and mention of the grant of the patent: **25.08.2010**
(21) Application number: 06728519.7
(22) Date of filing: 30.03.2006
(51) Int. Cl.: H04B 7/185

(54) **SYSTEM FOR EXTENDING BI-DIRECTIONAL SATELLITE RADIO COMMUNICATIONS IN TUNNELS**
SYSTEM ZUR ERWEITERUNG ZWEIWEG SATELLITEN FUNKKOMMUNIKATIONEN IN TUNNELS
SYSTÈME D'EXTENSION DE RADIOCOMMUNICATIONS PAR SATELLITE BIDIRECTIONNELLES DANS DES TUNNELS

(43) Date of publication of application: 10.12.2008
(73) Proprietor: Finmeccanica - Società per azioni, 00195 Roma (IT)
(72) Inventor: CONFORTO, Paolo, I-00195 Roma (IT); LOSQUADRO, Giacinto, I-00195 Roma (IT); MURA, Rodolfo, I-00195 Roma (IT)
(74) Representative: Capasso, Olga
(86) International application number: PCT/IT2006/000203
(87) International publication number: WO 2007/113861

(56) References cited:
- FR-A- 2 871 635
- US-A- 5 287 543
- US-B1- 6 570 858

## Description

The invention relates to a communication system that relays a satellite signal inside tunnels and relays the signals transmitted inside said tunnels towards the satellite, in such a way as to assure to vehicles transiting inside the tunnels a perfect transmission and reception quality even in the absence of satellite visibility.

The system is based on a fixed terminal, for gallery illumination, connected to a fixed satellite station, and on a mobile terminal installed on the vehicle, connected to a mobile satellite terminal.

The system automatically effects a switching action between satellite channel and radio channel in the tunnel, and vice versa, to assure the continuity of the vehicle-satellite link.

The system finds elective application for railway vehicles.

### FIELD OF APPLICATION

The invention enables to exchange digital and/or analogue signals by means of a radio link between a mobile terminal apparatus positioned on a vehicle and a satellite, in the absence of vehicle-satellite visibility. The invention enables to overcome the problems of total interruption of the vehicle-satellite link when the vehicle enters a gallery.

The invention finds application in the railway industry to assure to one or more trains the continuity of the transmission and reception of analogue and/or digital signals even while travelling in tunnels. Its use can also be extended to other vehicles and/or urban areas characterised by the presence of obstacles that prevent the visibility of the satellite.

The invention is particularly advantageous for via satellite links from and to the train, because it enables:
a) to provide services without interruptions, even broadband, e.g. multi-channel digital television, or which require interaction between passenger and terrestrial network (e.g. Internet, email), even when the train travels through tunnels and, more in general, in areas where the satellite is not visible;
b) to exchange data between train and terrestrial service centre, e.g. data for managing the train's travel, even during travel through tunnels and, more in general, in areas where the satellite is not visible.

### STATE OF THE ART

A know system for communicating via radio in tunnels is GSM-R, which allows solely the telephony service based on the well known standard GSM. This system, by its intrinsic nature, is not able to support broadband services, which are instead delivered even inside tunnels thanks to the invention described herein.

The GSM-R system allows to transmit via radio only signals transiting through its terrestrial network nodes: therefore, it does not enable to relay satellite signals from/to trains transiting through tunnels, which instead is made possible thanks to the invention described herein. Moreover, GSM-R enables exclusively to transmit digital signals in GSM format, whereas the invention described herein enables to retransmit digital signals of any format, e.g. of the family of the Digital Video Broadcasting (DVB) standards or GSM, UMTS and other future standards, and of analogue signals.

The invention described in the patent JP2171037 (Satellite communication system in tunnel) has the object of extending to the interior of a tunnel a terrestrial radio communication to a mobile object. In the patent JP2171037, the signal transmitted by a terrestrial base station and received by the train outside the gallery is simultaneously transmitted also to a satellite and relayed thereby to a repeater positioned in proximity to the tunnel. The train inside the tunnel receives the signal retransmitted by said repeater. Unlike the solution described in the patent JP2171037, the present invention confronts the problem of assuring the extension of a satellite communication, which engages the train in satellite visibility areas, even when the train enters into and transits through a tunnel. The patent JP2171037 only confronts the case of one-directional communication to the train, whilst the present invention also supports two-directional communications, which would not be obtainable with the apparatus of the patent JP2171037. The invention disclosed herein is based on a particular configuration of the transceiver apparatus equipping the mobile object, which enables to support two-directional communication both in areas with satellite visibility and during travel in tunnels. Moreover, the invention disclosed herein is also based on a method for the automatic switching from the satellite channel to the radio channel available in the tunnel, and vice versa, with related method for managing the carrier frequencies of the channels, in order to assure the extension of two-directional communication also to multiple trains simultaneously transiting inside the same tunnel, avoiding interference phenomena between the channels used by different trains. These functionalities of two-direction communication and management of the automatic switching between channels cannot be obtained with the solution of the patent JP2171037.

The problem of extending a mobile radio communication in tunnels by means of radio repeaters is also confronted in the patent JP 11112409 (Radio relay system for mobile communication). However, said patent only considers terrestrial radio signals transmitted from base stations with visibility of the repeater system that operates in tunnels. The invention disclosed in the patent JP11112409 does not provide for use of the satellite and, moreover, it does not propose solutions for the automatic switching of the mobile terminal between the two radio channels present outside and inside the tunnel; consequently, the solution described in the patent JP11112409 cannot support satellite communications, which instead are assured also inside tunnels thanks to the invention described herein.

The patent application JP2001230718 (Gap filler device for satellite broadcasting system and satellite broadcasting system) proposes a satellite communication system for areas with poor reception of satellite signals, which uses a receiving satellite apparatus and a transmitter apparatus connected by means of coaxial cable. Said system supports only one-directional communications (broadcast signals) and provides no solutions to the problem of the configuration of mobile terminals which have to operate in such a context. Moreover, the application JP2001230718 proposes no solutions for the automatic switching of the terminal from the satellite radio channel to the radio channel relayed by the gap filler system, and vice versa. All these problems are instead solved by the invention described herein.

Similar considerations can also be repeated for the patent application JP2001308765 (Gap filler system for tunnel, and device for reception and device for transmission used in the gap filler system). Said patent proposes a solution for extending a satellite signal broadcast inside tunnels through a communication system formed by a satellite receiver antenna, positioned outside the tunnel, and a plurality of ratio transmitter units inside the tunnel with fibre optic connection.

Solutions for relaying broadcast satellite signals are also proposed in the patent applications US2005059343 (Apparatus and method for identifying a gap filler in a satellite broadcasting system) and JP2004312349 (Satellite mobile broadcasting system and ground repeater). These solutions provide only receiving terminals and hence do not solve the problem of assuring two-directional communications from and to a mobile terminal. The systems for relaying the satellite signal are based on a regenerative approach comprising signal demodulation and re-modulation operations, and therefore the solutions are only valid for digital signals using particular and specific wave forms. The solution proposed herein instead is based on a transparent approach which adopts only amplification, carrier frequency conversion and signal filtering operations and therefore can support both analogue and digital signals with generic wave form, which allows an evident improvement and expansion of functionality with respect to the aforementioned patents. Moreover, the inventions described in the applications US2005059343 and JP2004312349 do not solve the problem of the automatic switching of the mobile terminal from the radio channel of the satellite signal to the radio channel of the relayed signal, and vice versa, which are instead solved with the invention described herein.

The above considerations also apply for the patent application JP2005123901 (Gap filler system) which proposes a regenerative system for relaying only one-directional digital signals which provide for the use of particular and specific wave forms, whereas the invention described herein enables to support both analogue and digital signals with generic wave form, allows to use two-directional signals and communications and solves the problem of automatic switching between the radio channel of the satellite signal and the radio channel of the relayed signal, hence providing new and extended functionalities which are not otherwise obtainable.

Additional solutions for relaying satellite signals to mobile terminals located in areas of non visibility of the satellite are described in the patent application JP2003332964 (Satellite broadcast system, gap filler, monitor, auxiliary unit and satellite broadcasting method), in the patent JP11261999 (Satellite-mobile object broadcasting system, repeater and reception terminal) and in the patent application JP2002050993 (Satellite broadcasting system). All three satellite signal repeater systems described therein are proposed to operate with receiving-only mobile terminals and broadcast satellite transmissions. Therefore the described solutions do not solve the problem of supporting two-directional communications from and to a mobile terminal, which are instead assured by the invention described herein.

Lastly, also with respect to the patent applications JP2002190760 (Satellite digital sound broadcasting system, and ground station, satellite and earth station in this system) and JP2002190758 (Multi-antenna system for mobile object), which described broadcast satellite signal repeater systems which exclusively support one-directional communications, considerations similar to the previous ones apply, in that the present invention enables to operate on a far broader range of signals and types of communications, such as two-directional and/or interactive communications, with an evident improvement over the prior art.

### SUMMARY OF THE INVENTION

The invention enables to extend the radio link between a moving vehicle and a satellite even in areas in which, due to obstacles of various kinds, the visibility of the satellite is precluded. In the description, reference is made to the railway environment, considering a train transiting along a path characterised by the presence of tunnels. The invention can also be applied to other environments, such as urban areas and / or other vehicles.

The system is based on a fixed terminal, for gallery illumination, connected to a fixed satellite station, and on a mobile terminal installed on a train and connected to a mobile satellite terminal.

In the satellite to train connection, the fixed external satellite station receives the satellite signal transmitted by the satellite and directed to the train and relays it inside the tunnel through the fixed terminal. In the direction of the train-satellite connection, the fixed terminal receives the signal transmitted by the train and directed to the satellite and relays it outside the tunnel through the fixed external satellite station.

The train is equipped with a transceiver apparatus, called mobile terminal, connected to the mobile satellite terminal. The latter enables to exchange signals directly with the satellite in the periods when there is visibility between train and satellite, i.e. when the train travels in open spaces without the presence of obstacles. When the train, because of its motion, abandons an area of visibility of the satellite and enters a tunnel, the system automatically accomplishes a switch between the satellite channel and the radio channel available in the tunnel, which carries the same satellite signal, but on a different carrier frequency. Similarly, when the train exits the gallery and enters an area of visibility of the satellite, the system automatically accomplishes a switch between radio channel available in the tunnel and satellite channel.

The switching between channels takes place according to a logic that process the information on the quality of the channels and decides which of them to use.

The carrier frequencies of the satellite channel and of the channel in the tunnel in the satellite-train direction are mutually linked by a defined frequency conversion relationship. Similarly, the carrier frequencies of the satellite channel and of the channel in the tunnel in the train-satellite direction are mutually linked by a defined frequency conversion relationship. The system enables to effect the switching between satellite channel and channel in tunnel without loss of information perceptible by the user, for any velocity of travel of the train.

The invention is described herein with reference to an embodiment, which is described for illustrative, non limiting purposes.

### DESCRIPTION OF FIGURES

FIG. 1: Block diagram of the fixed transmission and reception system in tunnel.
FIG. 2: Block diagram of the filtering and equalisation device on the return channel.
FIG. 3A: Block diagram of the receiving and transmitting chains of the mobile terminal and of their integration with the mobile satellite terminal, in case of switching on the receiving chain effected on analogue signals.
FIG. 3B: Block diagram of the receiving and transmitting chains of the mobile terminal and of their integration with the mobile satellite terminal, in case of switching on the receiving chain effected on demodulated signals.
FIG. 3C: Block diagram of the receiving and transmitting chains of the mobile terminal and of their integration with the mobile satellite terminal, in case of switching on the receiving chain effected on decoded and formatted signals.
FIG. 4A: Operating logic flow of the switching control device, for switching on the receiving chain effected on analogue or demodulated signals.
FIG. 4B: Operating logic flow of the switching control device, for switching on the receiving chain effected on decoded and formatted signals.

### DETAILED DESCRIPTION OF THE INVENTION IN ONE OF ITS REALIZATION FORM

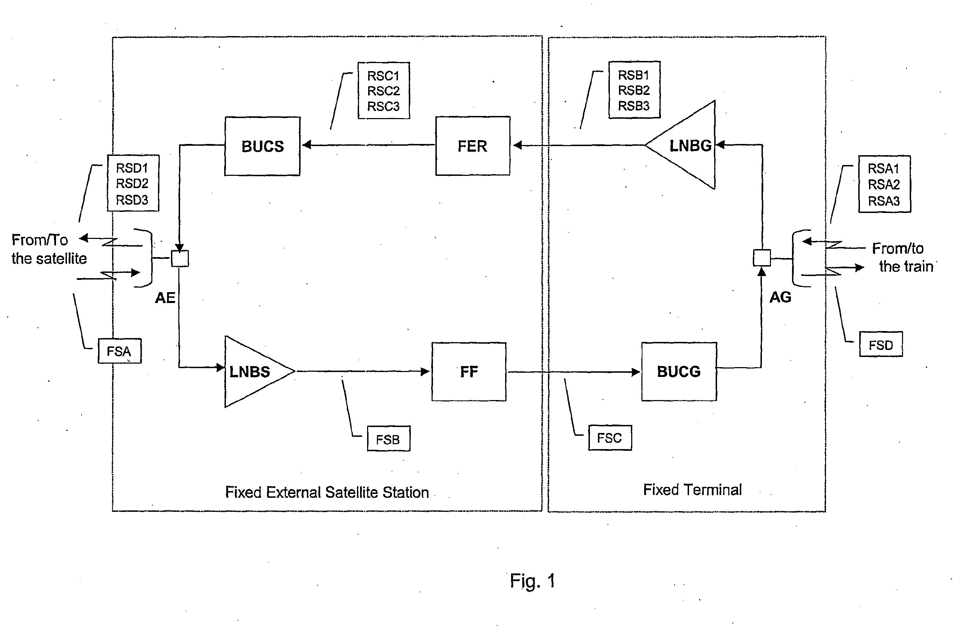

Figure 1 illustrates the block diagram of the transmission and reception system relating to the fixed terminal, which extends the satellite connection in tunnel, connected to the external fixed satellite station. The system is able:
- to receive from the mobile terminals installed on the trains a number N of signals on N carrier frequencies (FRA1, FFA2,..., FRAN) and to relay them to the satellite on N different carrier frequencies (FRD1, FRD2,..., FRDN);
- to receive from the satellite a number M of signals on M carrier frequencies (FFA1, FFA2,...,FFAM) and to relay them to mobile terminals installed on the trains on M different carrier frequencies (FFD1, FFD2,...,FFDM).

The system is described herein with reference to the case N=3 and M=1 (the carrier frequency of the signal transmitted by the satellite is designated FFA and the carrier frequency of the same signal relayed inside the tunnel is designated FFD); however, the invention is compatible with a higher number of signals N and number of signals M.

With reference to Figure 1, the operation of the system is described as follows:
1. The signals RSA1, RSA2, RSA3 transmitted by the mobile terminals on the trains and having band occupation BR1, BR2, BR3 Hertz around the carrier frequencies FRA1, FRA2, FRA3, respectively, are received by the antenna in the tunnel (AG) and made to pass through the low noise amplifier block of the terminal in the tunnel (LNBG) obtaining the signals RSB1, RSB2, RSB3, having the same band occupations BR1, BR2, BR3 Hertz around the carrier frequencies FRB1, FRB2, FRB3 less than FRA1, FRA2, FRA3, respectively.
2. The signals RSB1, RSB2, RSB3 are made to pass through the filtering and equalisation device (FER) obtaining the signals RSC1, RSC2, RSC3 having band occupations BR1, BR2, BR3 Hertz around the carrier frequencies FRC1, FRC2, FRC3 and equal level of power P.
3. The signals RSC1, RSC2, RSC3 are made to pass through the amplifier block of the fixed satellite station (BUCS) obtaining the signals RSD1, RSD2, RSD3 having band occupations BR1, BR2, BR3 Hertz around the carrier frequencies FRD1, FRD2, FRD3 greater than FRC1, FRC2, FRC3, respectively and irradiated to the satellite through the external antenna (AE).
4. The signal FSA transmitted by the satellite and having band occupation BF Hertz around the carrier frequency FFA is received by the external antenna (AE) and made to pass through the low noise amplifier block of the fixed satellite station (LNBS) obtaining the signal FSB having the same band occupation BF Hertz around the carrier frequency FFB less than FFA.
5. The signal FSB is made to pass through the filtering device (FF) obtaining the signal FSC having band occupation BF Hertz around the carrier frequency FFC.
6. The signal FSC is made to pass through the amplifier block of the fixed terminal in the tunnel (BUCG) obtaining the signal FSD having band occupation BF Hertz around the carrier frequency FFD greater than FFC and irradiated to the mobile terminals on the trains through the antenna in the tunnel (AG).

The carrier frequencies on which the .signals RSA1, RSA2, RSA3, FSD are transmitted inside the tunnel (between mobile terminal on the train and fixed terminal installed in the tunnel) and the signals RSD1, RSD2, RSD3, FSA outside the tunnel are linked by the following relationships:
- Satellite-train connection: FFA=FFD+FF6ssata where FFfissata indicates a constant quantity.
- Train-Satellite connection: FRA1=FRD1+FRfissata, FRA2=FRD2+FRfissata, FRA3=FRD3+FRfissata where FRfissata indicates a constant quantity.

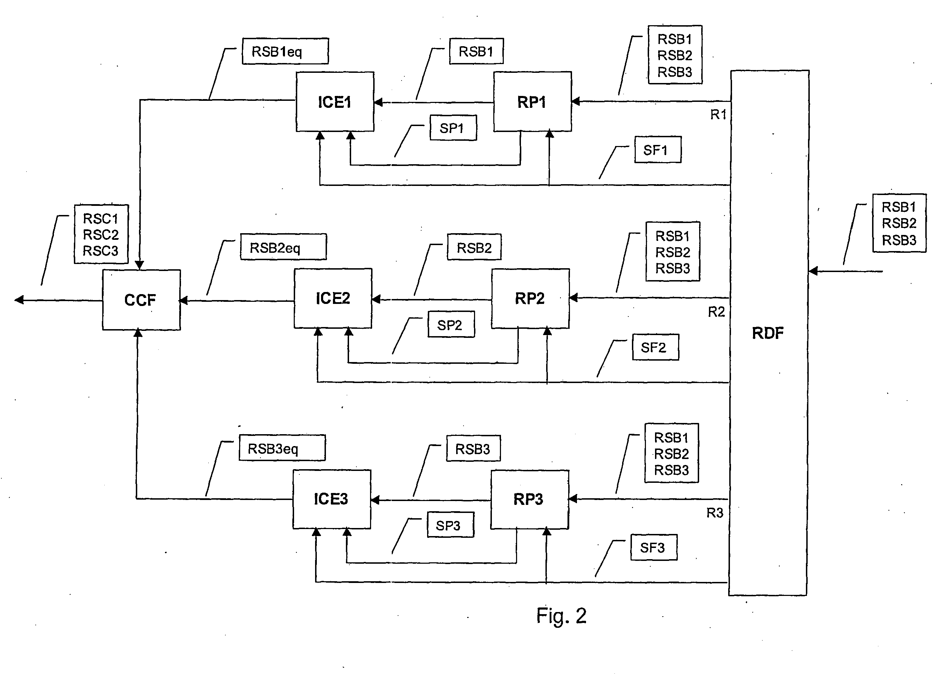

Figure 2 shows a possible embodiment of the filtering and equalisation device on the train-satellite channel (FER in Figure 1). With reference to Figure 2, the operation of the device is described as follows:
- The signals RSB1, RSB2, RSB3 are made to pass through the frequency measuring device (RDF) which determines the carrier frequencies FRB1, FRB2, FRB3 around which the signals were received.
- The signals RSB1, RSB2, RSB3 are replicated on the three branches R1, R2, R3 which connect the frequency measuring device (RDF) to the three power measuring devices (RP1, RP2, RP3).
- The frequency measuring device (RDF) generates three signals:
   - The signal SF1 that carries the information about the carrier frequency FRB1 around which the signal RSB1 is transmitted, which is passed on to the power measuring device (RP1) and channel isolator and equaliser (ICE1) devices.
   - The signal SF2 that carries the information about the carrier frequency FRB2 around which the signal RSB2 is transmitted, which is passed on to the power measuring device (RP2) and channel isolator and equaliser (ICE2) devices. The signal SF3 that carries the information about the carrier frequency FRB3 around which the signal RSB3 is transmitted, which is passed on to the power measuring device (RP3) and channel isolator and equaliser (ICE3) devices.
- The power measuring device RP1 lets the signal RSB1 pass unaltered, determines its power level and communicates it, through the signal SP1, to the channel isolator and equaliser ICE1.
- The power measuring device RP2 lets the signal RSB2 pass unaltered, determines its power level and communicates it, through the signal SP2, to the channel isolator and equaliser ICE2.
- The power measuring device RP3 lets the signal RSB3 pass unaltered, determines its power level and communicates it, through the signal SP3, to the channel isolator and equaliser ICE3.
- The channel isolator and equaliser ICE1 isolates the signal RSB1 with bandwidth occupation BR1 around the carrier frequency FRB1 and equalises its power the level P: the resulting signal is RSB1eq.
- The channel isolator and equaliser ICE2 isolates the signal RSB2 with bandwidth occupation BR2 around the carrier frequency FRB2 and equalises its power the level P: the resulting signal is RSB2eq.
- The channel isolator and equaliser ICE3 isolates the signal RSB3 with bandwidth occupation BR3 around the carrier frequency FRB3 and equalises its power the level P: the resulting signal is RSB3eq.
- The controller and frequency converter device (CCF) combines the three signals RSB1eq, RSB2eq, RSB3eq and generates, through a frequency conversion, the signals RSC1, RSC2, RSC3 at the frequencies FRC1, FRC2, FRC3, respectively.

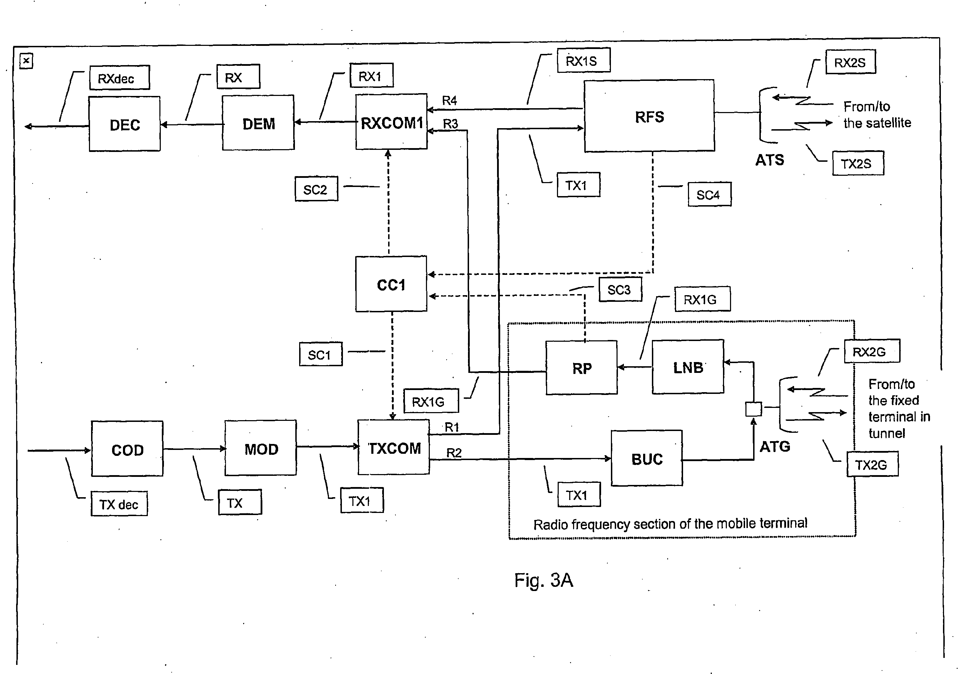

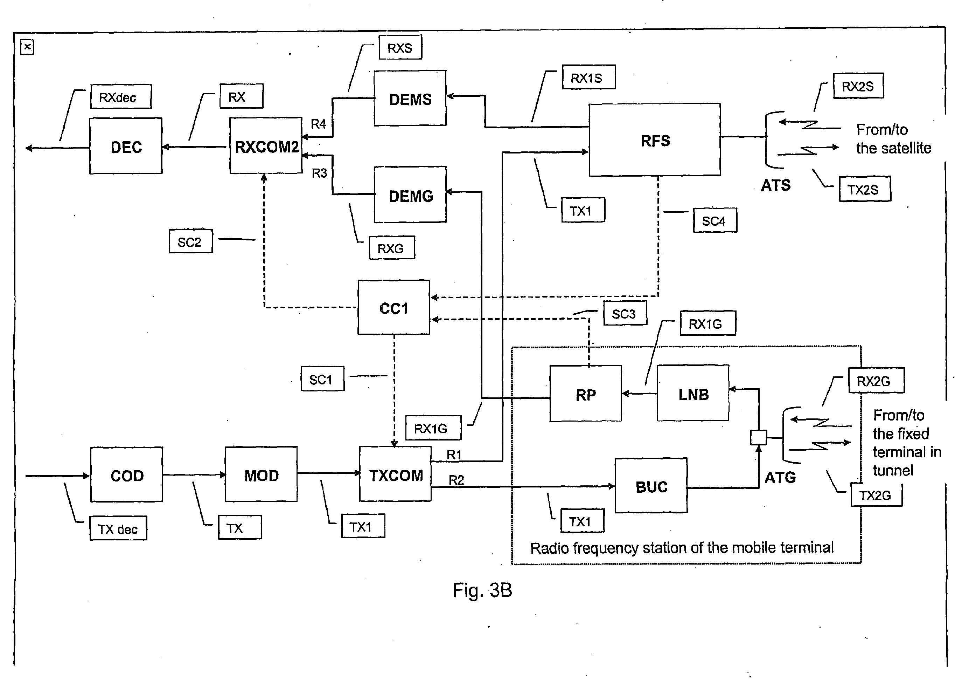

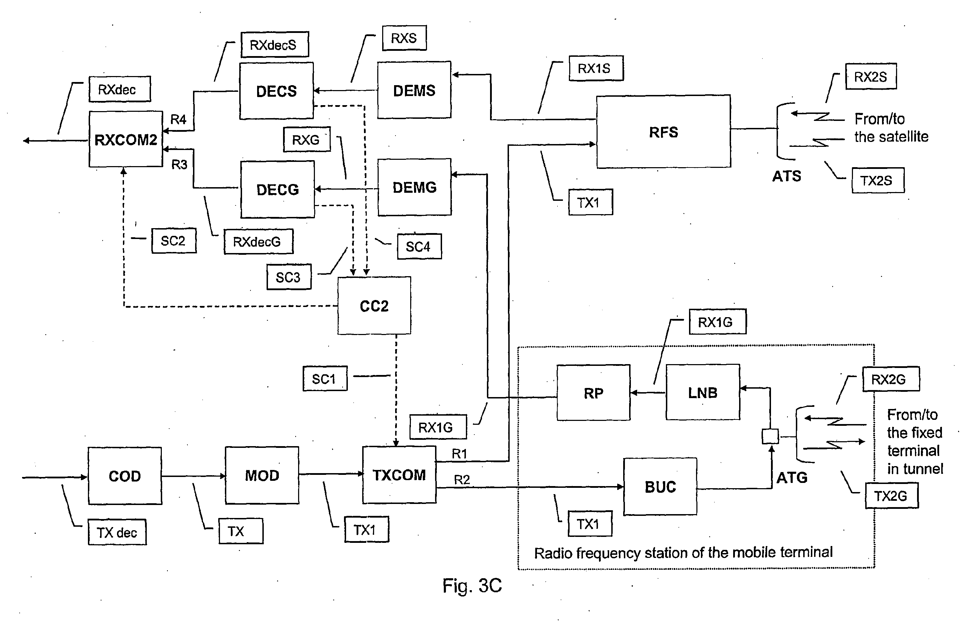

Figure 3A, Figure 3B and Figure 3C illustrate three possible embodiments of the block diagram of the transmission and reception system relating to the mobile terminal installed on the trains. In all three embodiments, the system is able:
- to receive from the fixed terminal installed in the tunnel a signal on a carrier frequency (FFD).
- To transmit to the fixed terminal installed in the tunnel a signal on a carrier frequency (FRA).

Figure 3A, Figure 3B and Figure 3C illustrate the possible embodiments of the reception and transmission chains of the mobile terminal and of their integration with the mobile satellite terminal. The three embodiments are possible according to whether the switching on the reception chain takes place on analogue signals (Figure 3A), demodulated digital signals (Figure 3B) or decoded and formatted digital signals (Figure 3C).

With reference to Figure 3A, the operation of the system is described as follows:
1. The digital signal TX at the output of the formatting and coding device (COD), obtained transforming the Txdec signal, is used to modulate, through a modulator (MOD), a transmission carrier frequency FTX1 obtaining the bandwidth BX1 signal TX1.
2. The signal TX1 is made to pass through the transmission switching device (TXCOM) which routes the aforesaid signal on the branch R1 which connects the radio frequency block of the mobile satellite terminal (RFS), or on the branch R2 which connects the amplifier block of the mobile terminal in the tunnel (BUC).
3. The transmission switching device (TXCOM) is commanded by a switching control device (CC1) through the control signal SC1 which indicates on which branch (R1 or R2) the signal is to be routed.
4. If the selected branch is R1, the signal TX1 is made to pass through the radio frequency block of the mobile satellite terminal (RFS) and thereby converted to the carrier frequency FTX2S, amplified and irradiated through the antenna of the mobile satellite terminal (ATS) to the satellite.
5. If the selected branch is R2, the signal TX1 is made to pass through the amplifier block of the mobile terminal in the tunnel (BUC) and thereby converted to the carrier frequency FTX2G=FRA, amplified and irradiated through the antenna of the mobile terminal in the tunnel (ATG) to the fixed terminal in the tunnel.
6. The switching control device (CC1) implements the switching logic and decides which transmission and reception chain to use (mobile terminal for tunnel or mobile satellite terminal) according to the channel availability information received from the mobile terminal for tunnel and from the mobile satellite terminal through the signals SC3 and SC4, respectively.
7. If the satellite is visible, the signal RX2S irradiated on the carrier frequency FX2S is received by the antenna of the mobile satellite terminal (ATS), transformed by the radio frequency block of the mobile satellite terminal (RFS) into the signal RX1S and passed on the carrier frequency FX1S less than FX2S, through the branch R4, to the reception switching device (RXCOM1).
8. If the satellite is not visible and the mobile terminal is in the area of coverage of the fixed terminal installed in the tunnel, the signal RX2G irradiated on the carrier frequency FX2G=FFD is received by the antenna of the mobile terminal in the tunnel (ATG), transformed by the low noise figure block of the mobile terminal in the tunnel (LNB) into the signal RX1G and passed on the carrier frequency FX1G less than FX2G to the power measuring device (RP).
9. The signal RX1G travels through the power measuring device (RP) which computes its power level that is communicated through the control signal SC3 to the switching control device (CC1) and reaches, through the branch R3, the reception switching device (RXCOM1).
10. The reception switching device (RXCOM) is commanded by the switching control device (CC1) through the control signal SC2 which indicates which analogue input signal (branch R3 or branch R4) has to go through to the output (signal RX1).
11. The signal RX1 at the output of the reception switching device (RXCOM1) is transformed into the signal RX by the demodulation device (DEM).
12. The signal RX at the output of the demodulation device (DEM) is transformed into the signal RXdec by the decoding and formatting device (DEC).

With reference to Figure 3B, the operation of the system is described indicating its differences with respect to the operation of the system described in Figure 3A. The operation of all the parts of the system that are not specified hereafter is to be construed as identical to what is described with reference to Figure 3A:
1. The signal RX1S at the output of the radio frequency block of the mobile satellite terminal (RFS) is transformed into the signal RXS by the demodulation device for the satellite channel (DEMS) and passed on the branch R4 to the reception switching device (RXCOM2).
2. The signal RX1G at the output of the power detection device (RP) is transformed into the signal RXG by the demodulation device for the tunnel channel (DEMG) and passed on the branch R3 to the reception switching device (TXCOM2).
3. The reception switching device (RXCOM2) is commanded by the switching control device (CC1) through the control signal SC2 which indicates which analogue input signal (branch R3 or branch R4) has to go through to the output (signal RX).

With reference to Figure 3C, the operation of the system is described indicating its differences with respect to the operation of the system described in Figure 3B. The operation of all the parts of the system that are not specified hereafter is to be construed as identical to what is described with reference to Figure 3B:
1. The signal RXS at the output of the demodulation device for the satellite channel (DEMS) is transformed into the signal RXdecS by the decoding and formatting device for the satellite channel (DECS) and passed on the branch R4 to the reception switching device (RXCOM2).
2. The signal RXG at the output of the demodulation device for the tunnel channel (DEMG) is transformed into the signal RXdecG by the decoding and formatting device for the tunnel channel (DECG)and passed on the branch R3 to the reception switching device (RXCOM2).
3. The reception switching device (RXCOM2) is commanded by the switching control device (CC2) through the control signal SC2 which indicates which analogue input signal (branch R3 or branch R4) has to go through to the output (signal RXdec).
4. The switching control device (CC2) implements the switching logic and decides which transmission and reception chain to use (mobile terminal for tunnel or mobile satellite terminal) according to the channel availability information received through the signals SC3 and SC4, coming from the decoding and formatting device for the tunnel channel (DECG) and from the decoding and formatting device for the satellite channel (DECS), respectively.

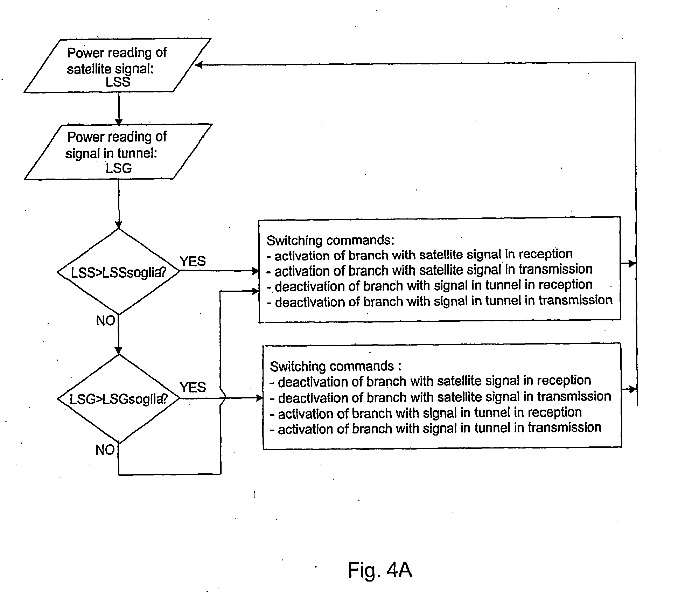

The switching control device (CC1) used in the case of mobile terminal with reception switching effected on analogue signals (Figure 3A) and demodulated signals (Figure 3B) operates according to the logic described in Figure 4A.

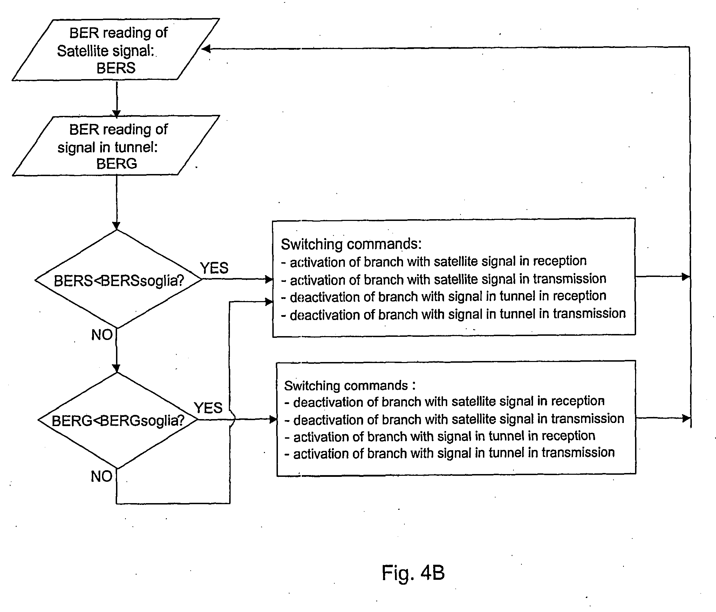

The switching control device (CC2) used in the case of mobile terminal with reception switching effected on decoded and formatted signals (Figure 3C) operates according to the logic described in Figure 4B.

## Claims

1. A radio link system between a satellite and a vehicle able to maintain the transmission and reception of signals even in areas of non visibility between satellite and vehicle, comprising:
- a communication apparatus constituted by:
a) a transceiver antenna internal to the area of non visibility (AG);
b) a receiving device of the antenna AG (LNBG);
c) a filtering and equalisation device (FER);
d) a device transmitting the signal received by the antenna AG to a transceiver antenna external to the non visibility area (AE) (BUCS);
e) a transceiver antenna external to the area of non visibility (AE);
f) a device receiving the signal received by the antenna AE (LNBS);
g) a filtering device (FF);
h) a device transmitting the signal to the antenna AG (BUCG);
wherein
i) a plurality of signals (RSA1, RSA2, ..., RSAN) are received by said antenna (AG) and enter said receiving device (LNBG) which amplifies said signals and translates their carrier RSB1, RSB2,...., RSBN;
ii) said signals RSB1, RSB2, ,....,RSBN enter said filtering and equalisation device (FER) and are demultiplexed in frequency, equalised in level and re-multiplexed in frequency thereby originating the signals RSC 1, RSC2,...., RSCN;
iii) said signals RSC1, RSC2,..., ,....,RSBN enter said transmitting device (BUCS) which converts them in frequency on higher carrier frequencies and amplifies them, thereby originating signals RSD1, RSD2,...., RSDN which are irradiated to the satellite through said external antenna (AE);
iv) a signal FSA coming from the satellite is received by said external antenna (AE) and enters said receiving device (LNBS) which amplifies it and converts it in frequency to a lower carrier frequency, thereby originating the signal FSB;
v) said signal FSB enters said filtering device (FF) which eliminates the frequencies outside the range of interest, thereby originating the signal FSC;
vi) said signal FSC enters said transmitter device (BUCG) which converts it to a higher carrier frequency and amplifies it, thereby originating the signal FSD which is irradiated inside the area of non visibility through said antenna (AG);
- a mobile terminal constituted either by:
a) a first transmitting and receiving antenna (ATS);
b) a second transmitting and receiving antenna (ATG);
c) an analogue signal transmission switching device (TXCOM);
d) an analogue signal reception switching device (RXCOM);
e) a switching control device (CC1);
f) a device for transmitting from the device TXCOM to the antenna ATG comprising an amplifier and a frequency converter (BUC);
g) a radio frequency transmission and reception block to the antenna ATS (RFS);
h) a receiver device from the antenna ATG to the device RXCOM1 comprising a low figure of noise amplifier and a frequency converter (LNB);
i) a device for detecting the power of the output signal from the device LNB (RP); wherein
i) an analogue signal TX1 able to be transmitted via satellite or via radio link in the non visibility area enters said transmission switching device (TXCOM) which routes it alternatively on the branch R1 which connects said radio frequency block (RFS), or on the branch R2 which connects said transmitter device (BUC) according to a command received from said switching control device (CC1);
ii) said command received from said switching control device (CC1) is established according to signal availability and quality information received from said radio frequency block (RFS) and from said power measuring device (RP);
iii) if said signal TX1 is routed on the branch R1, said signal enters the radio frequency block (RFS) which converts it in frequency to a higher carrier frequency that that of said signal TX1, amplifies it and irradiates it through said antenna (ATS) to the satellite;
iv) if said signal TX1 is routed on the branch R2, said signal enters the device (BUC) which converts it in frequency to a higher carrier frequency that that of said signal TX1, amplifies it and irradiates it through said antenna (ATG) to the antenna AG;
v) a signal RX2S transmitted by the satellite is received by said antenna (ATS) and enters said radio frequency block (RFS) which amplifies it, determines its power level and communicates it to said switching control device (CC1), and converts it in frequency to a lower carrier frequency than the one on which said signal RX2S was received, thereby originating the signal RX IS;
vi) said signal RX1S enters through the branch R4 into the reception switching device (RXCOM1);
vii) a signal RX2G transmitted by the antenna AG is received by the antenna(ATG) and enters said device (LNB) which amplifies it and converts it in frequency to a lower carrier frequency than the one on which said signal RX2G was received, thereby originating the signal RX1G;
viii) said signal RX1G enters the power detection device (RP) which determines its power level, communicates it to said switching control device (CC1), and lets it pass unaltered;
ix) said signal RX1G enters through the branch R3 into the reception switching device (RXCOM1);
x) said signal RX1S or, alternatively, said signal RX1G is routed on the output branch of said reception switching device (RXCOM1) according to the command received from said switching control device (CC1), thereby originating the signal RX1;
or, alternatively constituted by :
a) a first transmitting and receiving antenna (ATS);
b) a second transmitting and receiving antenna (ATG);
c) an analogue signal transmission switching device (TXCOM);
d) a digital signal reception switching device (RXCOM2);
e) a switching control device (CC1);
f) a modulator device (MOD);
g) a device for transmitting from the device TXCOM to the antenna ATG comprising an amplifier and a frequency converter (BUC);
h) a radio frequency transmission and reception block to the antenna ATS (RFS);
i) a device for demodulating the signal coming from the antenna ATS (DEMS);
l) a receiver device from the antenna ATG to the device RXCOM2 comprising a low figure of noise amplifier and a frequency converter (LNB);
m) a device for detecting the power of the output signal from the device LNB (RP);
n) a device for demodulating the signal coming from the antenna ATG (DEMG); wherein
i) a digital signal TX enters said modulator device which transforms it into an analogue signal TX1 able to be transmitted via satellite or via radio link in the non visibility area;
ii) said signal TX1 enters said transmission switching device (TXCOM) which routes it alternatively on the branch R1 which connects the radio frequency block (RFS), or on the branch R2 which connects said transmitter device (BUC) according to a command received from said switching control device (CC1);
iii) said command received from said switching control device (CC1) is established according to signal availability and quality information received from said radio frequency block (RFS) and from said power measuring device (RP);
iv) if said signal TX1 is routed on the branch R1, said signal enters the radio frequency block (RFS) which converts it in frequency to a higher carrier frequency that that of said signal TX1, amplifies it and irradiates it through said antenna (ATS) to the satellite;
v) if said signal TX1 is routed on the branch R2, said signal enters the device (BUC) which converts it in frequency to a higher carrier frequency that that of said signal TX1, amplifies it and irradiates it through said antenna (ATG) to the antenna AG;
vi) a signal RX2S transmitted by the satellite is received by said antenna (ATS) and enters said radio frequency block (RFS) which amplifies it, determines its power level and communicates it to said switching control device (CC1), and converts it in frequency to a lower carrier frequency than the one on which said signal RX2S was received, thereby originating the signal RX1S;
vii) said signal RX1S enters the demodulation device (DEMS) which transforms it into the digital signal RXS;
viii) said signal RXS enters through the branch R4 into the reception switching device (RXCOM2);
ix) a signal RX2G transmitted by the antenna AG is received by the antenna(ATG) and enters said device (LNB) which amplifies it and converts it in frequency to a lower carrier frequency than the one on which said signal RX2G was received, thereby originating the signal RX1G;
x) said signal RX1G enters the power detection device (RP) which determines its power level, communicates it to said switching control device (CC1), and lets it pass unaltered;
xi) said signal RX1G enters the demodulation device (DEMG) which transforms it into the digital signal RXG;
xii) said signal RXG enters through the branch R3 into the reception switching device (RXCOM2);
xiii) said signal RXS or, alternatively, said signal RXG is routed on the output branch of said reception switching device (RXCOM2) according to the command received from said switching control device (CC1), thereby originating the signal RX;
or, alternatively constituted by :
a) a first transmitting and receiving antenna (ATS);
b) a second transmitting and receiving antenna (ATG);
c) an analogue signal transmission switching device (TXCOM);
d) a digital signal reception switching device (RXCOM2);
e) a switching control device (CC2);
f) a formatting and coding device (COD);
g) a modulator device (MOD);
h) a device for transmitting from the device TXCOM to the antenna ATG comprising an amplifier and a frequency converter (BUC);
i) a radio frequency transmission and reception block to the antenna ATS (RFS);
l) a device for demodulating the signal coming from the antenna ATS (DEMS);
m) a device for decoding and formatting the signal coming from the antenna ATS (DECS);
n) a receiver device from the antenna ATG to the device RXCOM2 comprising a low figure of noise amplifier and a frequency converter (LNB);
o) an optional device for detecting the power of the output signal from the device LNB (RP);
p) a device for demodulating the signal coming from the antenna ATG (DEMG);
q) a device for decoding and formatting the signal coming from the antenna ATG (DECG);
wherein
i) a digital signal TXdec enters said formatting and coding device (COD) which adds redundant bits and may perform an interlacing operation in which the order of transmission of the bits comprising the redundant incoming signal is altered, thereby originating the signal TX;
ii) said digital signal TX enters said modulator device (MOD) which transforms it into an analogue signal TX1 able to be transmitted via satellite or via radio link in the non visibility area;
iii) said signal TX1 enters said transmission switching device (TXCOM) which routes it alternatively on the branch R1 which connects said radio frequency block (RFS), or on the branch R2 which connects said transmitter device (BUC) according to a command received from said switching control device (CC2);
iv) said command received from said switching control device (CC2) is established according to bit error rate information received from said device for decoding and formatting the signal coming from the antenna ATS (DECS) and from said signal for decoding and formatting the signal coming from the antenna ATG (DECG);
v) if said signal TX1 is routed on the branch R1, said signal enters the radio frequency block (RFS) which converts it in frequency to a higher carrier frequency that that of said signal TX1, amplifies it and irradiates it through said antenna (ATS) to the satellite;
vi) if said signal TX1 is routed on the branch R2, said signal enters the device (BUC) which converts it in frequency to a higher carrier frequency that that of said signal TX1, amplifies it and irradiates it through said antenna (ATG) to the antenna AG;
vii) a signal RX2S transmitted by the satellite is received by said antenna (ATS) and enters said radio frequency block (RFS) which amplifies it and converts it in frequency to a lower carrier frequency than the one on which said signal RX2S was received, thereby originating the signal RX1S;
viii) said signal RX1S enters the demodulation device (DEMS) which transforms it into the digital signal RXS;
ix) said RXS signal enters the decoding and formatting device (DECS) which removes the redundancy bits, calculates the bit error rate (BERS) and communicates it to said switching control device (CC2), and may perform a de-interlacing operation in which the order of transmission of the bits composing said signal is restored, thereby originating the signal RXdecS;
x) said signal RXdecS enters through the branch R4 into the reception switching device (RXCOM2);
xi) a signal RX2G transmitted by the antenna AG is received by the antenna(ATG) and enters said device (LNB) which amplifies it and converts it in frequency to a lower carrier frequency than the one on which said signal RX2G was received, thereby originating the signal RX1G;
xii) said signal RX1G enters the optional power detection device (RP) which determines its power level and lets it pass unaltered;
xiii) said signal RX1G enters the demodulation device (DEMG) which transforms it into the digital signal RXG;
xiv) said RXG signal enters the decoding and formatting device (DECG) which removes the redundancy bits, calculates the bit error rate (BERG) and communicates it to said switching control device (CC2), and may perform a de-interlacing operation in which the order of transmission of the bits composing said signal is restored, thereby originating the signal RXdecG;
xv) said signal RXdecG enters through the branch R3 into the reception switching device (RXCOM2);
xvi) said signal RXdecS or, alternatively, said signal RXdecG is routed on the output branch of said reception switching device (RXCOM2) according to the command received from said switching control device (CC12), thereby originating the signal RXdec.

2. Method for switching between a satellite signal and a radio signal available in non visibility areas, and vice versa, based on the communication apparatus as claimed in claim 1, comprising the following operations:
a) reading the power level of the satellite signal (LSS) from the radio frequency block (RFS);
b) reading the power level of the radio signal in non visibility area (LSG) from the power measuring device (RP);
c) comparing said power level (LSS) with a pre-set threshold level for the satellite signal (LSSsoglia);
d) if said power level (LSS) is greater than said a pre-set threshold level (LSSsoglia):
i) sending to the reception switching device (RXCOM1 or RXCOM2) commands for activating the branch with satellite signal and deactivating the branch with signal in non visibility area;
ii) sending to the transmission switching device (TXCOM) commands for activating the branch with satellite signal and deactivating the branch with signal in non visibility area;
e) if said power level (LSS) is smaller than or equal to said a pre-set threshold level (LSSsoglia):
i) comparing said power level (LSG) with a pre-set threshold level for the signal in non visibility area (LSGsoglia);
f) if said power level of the signal in non visibility area (LSG) is greater than said pre-set threshold level for the signal in non visibility area (LSGsoglia):
i) sending to the reception switching device (RXCOM1 or RXCOM2) commands for deactivating the branch with satellite signal and activating the branch with signal in non visibility area;
ii) sending to the transmission switching device (TXCOM) commands for deactivating the branch with satellite signal and activating the branch with signal in non visibility area;
g) if said power level of the signal in non visibility area (LSG) is smaller than or equal to said pre-set threshold level for the channel in non visibility area (LSGsoglia):
i) sending to the reception switching device (RXCOM1 or RXCOM2) commands for activating the branch with satellite signal and deactivating the branch with signal in non visibility area;
ii) sending to the transmission switching device (TXCOM) commands for activating the branch with satellite signal and deactivating the branch with signal in non visibility area.

3. Method for switching between a satellite signal and a radio signal available in non visibility areas, and vice versa, based on the communication apparatus as claimed in claim 1, comprising the following operations:
a) reading the value of the bit error rate (BERS) calculated by said device (DECS) for decoding and formatting the digital signal present on the satellite channel;
b) reading the value of the bit error rate (BERG) calculated by said device (DECG) for decoding and formatting the digital signal present on the radio channel in non visibility area;
c) comparing said bit error rate on the satellite signal (BERS) with a pre-set threshold level for the satellite signal (BERSsoglia);
d) if said bit error rate on the satellite signal (BERS) is smaller than said pre-set threshold level for the satellite signal (BERSsoglia):
i) sending to the reception switching device (RXCOM1 or RXCOM2) commands for activating the branch with satellite signal and deactivating the branch with signal in non visibility area;
ii) sending to the transmission switching device (TXCOM) commands for activating the branch with satellite signal and deactivating the branch with signal in non visibility area;
e) if said bit error rate on the satellite signal (BERS) is greater than or equal to said pre-set threshold level for the satellite signal (BERSsoglia), comparing said bit error rate on the signal in non visibility area (BERG) with a pre-set threshold level for the signal in non visibility area (BERGsoglia);
f) if said bit error rate on the signal in non visibility area (BERG) is smaller than said pre-set threshold level for the signal in non visibility area (BERGsoglia):
i) sending to the reception switching device (RXCOM2) commands for deactivating the branch with satellite signal and activating the branch with signal in non visibility area;
ii) sending to the transmission switching device (TXCOM) commands for deactivating the branch with satellite signal and activating the branch with signal in non visibility area;
g) if said bit error rate on the signal in non visibility area (BERG) is greater than or equal to BERGsoglia:
i) sending to the reception switching device (RXCOM2) commands for activating the branch with satellite signal and deactivating the branch with signal in non visibility area;
ii) sending to the transmission switching device (TXCOM) commands for activating the branch with satellite signal and deactivating the branch with signal in non visibility area.

4. Method for managing the carrier frequencies of the satellite channel and the radio signal available in non visibility area based on the system as claimed in claim 1, comprising the following operations:
a) converting the N carrier frequencies (FRA1, FRA2,..., FRAN) whereon the signals (RSA1, RSA2,..., RSAN) are transmitted from the antenna ATG to the antenna AG, respectively into the carrier frequencies (FRD1, FRD2, ,..., FRDN) whereon are transmitted the signals (RSD1, RSD2,..., RSDN) from the satellite antenna AE to the satellite according to the relationships FRA1=FRD1+FRfissata, FRA2=FRD2+FRfissata,..., FRAN=FRDN+FRfissata where FRfissata indicates a constant quantity;
b) converting the M carrier frequencies (FFA1, FFA2,..., FFAM) whereon the signals (FSA1, FSA2,..., FSAM) are transmitted from the satellite to the satellite antenna AE, respectively into the carrier frequencies (FFD1, FFD2,..., FFDM) whereon are transmitted the signals (FSD1, FSD2,..., FSDM) from the antenna AG to the antenna ATG, according to the relationships FFA1=FFD1+FFfissata, FFA2=FFD2+FFfissata,..., FFAM=FFDM+FFfissata where FFfissata indicates a constant quantity.

## Patentansprüche

1. Funkverbindungssystem zwischen einem Satellit und einem Fahrzeug, durch welches das Senden und Empfangen von Signalen sogar in Bereichen fehlender Sichtbarkeit zwischen Satellit und Fahrzeug aufrechterhalten werden kann, wobei das System das Folgende umfasst:
- eine Kommunikationsvorrichtung, welche aus dem Folgenden aufgebaut ist:
a) einer Sende/Empfangs-Antenne in dem Bereich fehlender Sichtbarkeit (AG);
b) einer Empfangseinheit für die Antenne AG (LNBG);
c) einer Filter- und Entzerrungseinheit (FER);
d) einer Einheit, welche das von der Antenne AG empfangene Signal an eine Sende/Empfangs-Antenne außerhalb des Bereichs fehlender Sichtbarkeit (AE) sendet (BUCS);
e) einer Sende/Empfangs-Antenne außerhalb des Bereichs fehlender Sichtbarkeit (AE);
f) einer Einheit, welche das von der Antenne AE empfangene Signal empfängt (LNBS);
g) einer Filtereinheit (FF);
h) einer Einheit, welche das Signal an die Antenne AG sendet (BUCG);
wobei
i) mehrere Signale (RSA1, RSA2, ..., RSAN) von der Antenne (AG) empfangen werden und in die Empfangseinheit (LNBG) gelangen, welche die Signale verstärkt und ihre Trägersignale RSB1, RSB2, ..., RSBN umsetzt;
ii) die Signale RSB1, RSB2, ..., RSBN in die Filter- und Entzerrungseinheit (FER) gelangen und in der Frequenz demultiplexiert, in der Höhe entzerrt und in der Frequenz remultiplexiert werden, wodurch die Signale RSC1, RSC2, ..., RSCN entstehen;
iii) die Signale RSC1, RSC2, ..., RSCN in die Sendeeinheit (BUCS) gelangen, welche sie auf höhere Trägerfrequenzen umwandelt und verstärkt, wodurch die Signale RSD1, RSD2, ..., RSDN entstehen, welche über die externe Antenne (AE) zu dem Satelliten abgestrahlt werden;
iv) ein Signal FSA, welches von dem Satelliten kommt, von der externen Antenne (AE) empfangen wird und in die Empfangseinheit (LNBS) gelangt, welche es verstärkt und auf eine niedrigere Trägerfrequenz umwandelt, wodurch das Signal FSB entsteht;
v) das Signal FSB in die Filtereinheit (FF) gelangt, welche die Frequenzen außerhalb des interessierenden Bereichs eliminiert, wodurch das Signal FSC entsteht;
vi) das Signal FSC in die Sendeeinheit (BUCG) gelangt, welche es auf eine höhere Trägerfrequenz umwandelt und verstärkt, wodurch das Signal FSD entsteht, welches durch die Antenne (AG) innerhalb des Bereichs fehlender Sichtbarkeit abgestrahlt wird;
- ein mobiles Endgerät, welches entweder aus dem Folgenden aufgebaut ist:
a) einer ersten Sende- und Empfangsantenne (ATS);
b) einer zweiten Sende- und Empfangsantenne (ATG);
c) einer Analogsignal-Sende-Schalteinheit (TXCOM);
d) einer Analogsignal-Empfangs-Schalteinheit (RXCOM);
e) einer Schaltsteuerungseinheit (CC1);
f) einer Einheit zum Senden von der Einheit TXCOM an die Antenne ATG, welche einen Verstärker und einen Frequenzwandler umfasst (BUC);
g) einem Funkfrequenz-Sende- und -Empfangsblock für die Antenne ATS (RFS);
h) einer Empfängereinheit für die Einheit RXCOM1 zum Empfang von der Antenne ATG, welche einen rauscharmen Verstärker und einen Frequenzwandler umfasst (LNB);
i) einer Einheit zum Erfassen der Leistung des Ausgangssignals aus der Einheit LNB (RP);
wobei
i) ein Analogsignal TX1, welches in dem Bereich fehlender Sichtbarkeit über Satellit oder über Funkverbindung gesendet werden kann, in die Sende-Schalteinheit (TXCOM) gelangt, welche es gemäß einem von der Schaltsteuerungseinheit (CC1) empfangenen Befehl alternativ auf die Zweigleitung R1, welche den Funkfrequenzblock (RFS) verbindet, oder die Zweigleitung R2 leitet, welche die Sendevorrichtung (BUC) verbindet;
ii) der von der Schaltsteuerungseinheit (CC1) empfangene Befehl gemäß Signalverfügbarkeits- und Signalqualitätsinformationen erstellt wird, die von dem Funkfrequenzblock (RFS) u n d von d e r Leistungsmesseinheit (RP) empfangen werden;
iii) wenn das Signal TX1 auf die Zweigleitung R1 geleitet wird, das Signal in den Funkfrequenzblock (RFS) gelangt, welcher es auf eine höhere Trägerfrequenz als diejenige des Signals TX1 umwandelt, verstärkt und über die Antenne (ATS) zu dem Satelliten abstrahlt;
iv) wenn das Signal TX1 auf die Zweigleitung R2 geleitet wird, das Signal in die Einheit (BUC) gelangt, welche es auf eine höhere Trägerfrequenz als diejenige des Signals TX1 umwandelt, verstärkt und über die Antenne (ATG) zu der Antenne AG abstrahlt;
v) ein Signal RX2S, welches von dem Satelliten gesendet wird, von der Antenne (ATS) empfangen wird und in den Funkfrequenzblock (RFS) gelangt, welcher es verstärkt, seine Leistungsstärke bestimmt und es an die Schaltsteuerungseinheit (CC1) übermittelt und auf eine niedrigere Trägerfrequenz als diejenige umwandelt, auf welcher das Signal RX2S empfangen wird, wodurch das Signal RX1S entsteht;
vi) das Signal RX1S über die Zweigleitung R4 in die Empfangs-Schalteinheit (RXCOM1) gelangt;
vii)ein Signal RX2G, welches von der Antenne AG gesendet wird, von der Antenne (ATG) empfangen wird und in die Einheit (LNB) gelangt, welche es verstärkt und auf eine niedrigere Trägerfrequenz als diejenige umwandelt, auf welcher das Signal RX2G empfangen wird, wodurch das Signal RX1G entsteht;
viii) das Signal RX1G in die Leistungserfassungseinheit (RP) gelangt, welche seine Leistungsstärke ermittelt, es zu der Schaltsteuerungseinheit (CC1) übermittelt und es unverändert passieren lässt;
ix) das Signal RX1G über die Zweigleitung R3 in die Empfangs-Schalteinheit (RXCOM1) gelangt;
x) das Signal RX1S oder alternativ das Signal RX1G gemäß dem Befehl, der von der Schaltsteuerungseinheit (CC1) empfangen wird, zum Ausgangszweig der Empfangs-Schalteinheit (RXCOM1) geleitet wird, wodurch das Signal RX1 entsteht;
oder alternativ aus dem Folgenden aufgebaut ist:
a) einer ersten Sende- und Empfangsantenne (ATS);
b) einer zweiten Sende- und Empfangsantenne (ATG);
c) einer Analogsignal-Sende-Schalteinheit (TXCOM);
d) einer Digitalsignal-Empfangs-Schalteinheit (RXCOM2);
e) einer Schaltsteuerungseinheit (CC1);
f) einer Modulatoreinheit (MOD);
g) einer Einheit zum Senden von der Einheit TXCOM an die Antenne ATG, welche einen Verstärker und einen Frequenzwandler umfasst (BUC);
h) einem Funkfrequenz-Sende- und -Empfangsblock für die Antenne ATS (RFS);
i) einer Einheit zum Demodulieren des Signals, welches von der Antenne ATS kommt (DEMS);
l) einer Empfängereinheit für die Einheit RXCOM2 zum Empfang von der Antenne ATG, welche einen rauscharmen Verstärker und einen Frequenzwandler umfasst (LNB);
m) einer Einheit zum Erfassen der Leistung des Ausgangssignals aus der Einheit LNB (RP);
n) einer Einheit zum Demodulieren des Signals, welches von der Antenne ATG kommt (DEMG);
wobei
i) ein Digitalsignal TX in die Modulatoreinheit gelangt, welche es in ein Analogsignal TX1 umwandelt, das über Satellit oder über Funkverbindung in dem Bereich fehlender Sichtbarkeit gesendet werden kann;
ii) das Signal TX1 in die Sende-Schalteinheit (TXCOM) gelangt, welche es gemäß einem von der Schaltsteuerungseinheit (CC1) empfangenen Befehl alternativ auf die Zweigleitung R1, welche den Funkfrequenzblock (RFS) verbindet, oder die Zweigleitung R2 leitet, welche die Sendevorrichtung (BUC) verbindet;
iii) der von der Schaltsteuerungseinheit (CC1) empfangene Befehl gemäß Signalverfügbarkeits- und Signalqualitätsinformationen erstellt wird, die von dem Funkfrequenzblock (RFS) und von der Leistungsmesseinheit (RP) empfangen werden;
iv) wenn das Signal TX1 auf die Zweigleitung R1 geleitet wird, das Signal in den Funkfrequenzblock (RFS) gelangt, welcher es auf eine höhere Trägerfrequenz als diejenige des Signals TX1 umwandelt, verstärkt und über die Antenne (ATS) zu dem Satelliten abstrahlt;
v) wenn das Signal TX1 auf die Zweigleitung R2 geleitet wird, das Signal in die Einheit (BUC) gelangt, welche es auf eine höhere Trägerfrequenz als diejenige des Signals TX1 umwandelt, verstärkt und über die Antenne (ATG) zu der Antenne AG abstrahlt;
vi) ein Signal RX2S, welches von dem Satelliten gesendet wird, von der Antenne (ATS) empfangen wird und in den Funkfrequenzblock (RFS) gelangt, welcher es verstärkt, seine Leistungsstärke bestimmt und es an die Schaltsteuerungseinheit (CC1) übermittelt und auf eine niedrigere Trägerfrequenz als diejenige umwandelt, auf welcher das Signal RX2S empfangen wird, wodurch das Signal RX1S entsteht;
vii)das Signal RX1S in die Demodulatoreinheit (DEMS) gelangt, welche es in das Digitalsignal RXS umwandelt;
viii) das Signal RXS über die Zweigleitung R4 in die Empfangs-Schalteinheit (RXCOM2) gelangt;
ix) ein Signal RX2G, welches von der Antenne AG gesendet wird, von der Antenne (ATG) empfangen wird und in die Einheit (LNB) gelangt, welche es verstärkt und auf eine niedrigere Trägerfrequenz als diejenige umwandelt, auf welcher das Signal RX2G empfangen wird, wodurch das Signal RX1G entsteht;
x) das Signal RX1G in die Leistungserfassungseinheit (RP) gelangt, welche seine Leistungsstärke ermittelt, es zu der Schaltsteuerungseinheit (CC1) übermittelt und es unverändert passieren lässt;
xi) das Signal RX1G in die Demodulatoreinheit (DEMG) gelangt, welche es in das Digitalsignal RXG umwandelt;
xii) das Signal RXG über die Zweigleitung R3 in die Empfangs-Schalteinheit (RXCOM2) gelangt;
xiii) das Signal RXS oder alternativ das Signal RXG gemäß dem Befehl, der von der Schaltsteuerungseinheit (CC1) empfangen wird, zum Ausgangszweig der Empfangs-Schalteinheit (RXCOM2) geleitet wird, wodurch das Signal RX entsteht;
oder alternativ aus dem Folgenden aufgebaut ist:
a) einer ersten Sende- und Empfangsantenne (ATS);
b) einer zweiten Sende- und Empfangsantenne (ATG);
c) einer Analogsignal-Sende-Schalteinheit (TXCOM);
d) einer Digitalsignal-Empfangs-Schalteinheit (RXCOM2);
e) einer Schaltsteuerungseinheit (CC2);
f) einer Formatier- und Codiereinheit (COD);
g) einer Modulatoreinheit (MOD);
h) einer Einheit zum Senden von der Einheit TXCOM an die Antenne ATG, welche einen Verstärker und einen Frequenzwandler umfasst (BUC);
i) einem Funkfrequenz-Sende- und -Empfangsblock für die Antenne ATS (RFS);
l) einer Einheit zum Demodulieren des Signals, welches von der Antenne ATS kommt (DEMS);
m) einer Einheit zum Decodieren und Formatieren des Signals, welches von der Antenne ATS kommt (DECS);
n) einer Empfängereinheit für die Einheit RXCOM2 zum Empfang von der Antenne ATG, welche einen rauscharmen Verstärker und einen Frequenzwandler umfasst (LNB);
o) einer optionalen Einheit zum Erfassen der Leistung des Ausgangssignals aus der Einheit LNB (RP);
p) einer Einheit zum Demodulieren des Signals, welches von der Antenne ATG kommt (DEMG);
q) einer Einheit zum Decodieren und Formatieren des Signals, welches von der Antenne ATG kommt (DECG);
wobei
i) ein Digitalsignal TXdec in die Formatier- und Codiereinheit (COD) gelangt, welche Redundanzbits hinzufügt und eine Verschachtelungsoperation durchführen kann, bei welcher die Reihenfolge der Sendung der Bits verändert wird, welche das redundante eingehende Signal umfassen, wodurch das Signal TX entsteht;
ii) das Digitalsignal TXdec in die Modulatoreinheit (MOD) gelangt, welche es in ein Analogsignal TX1 umwandelt, das über Satellit oder über Funkverbindung in dem Bereich fehlender Sichtbarkeit gesendet werden kann;
iii) das Signal TX1 in die Sende-Schalteinheit (TXCOM) gelangt, welche es gemäß einem von der Schaltsteuerungseinheit (CC2) empfangenen Befehl alternativ auf die Zweigleitung R1, welche den Funkfrequenzblock (RFS) verbindet, oder die Zweigleitung R2 leitet, welche die Sendevorrichtung (BUC) verbindet;
iv) der von der Schaltsteuerungseinheit (CC2) empfangene Befehl gemäß Bitfehlerrateninformationen erstellt wird, die von der Einheit zum Decodieren und Formatieren des Signals, das von der Antenne ATS kommt (DECS), und von der Einheit zum Decodieren und Formatieren des Signals, das von der Antenne ATS kommt (DECG), empfangen werden;
v) wenn das Signal TX1 auf die Zweigleitung R1 geleitet wird, das Signal in den Funkfrequenzblock (RFS) gelangt, welcher es auf eine höhere Trägerfrequenz als diejenige des Signals TX1 umwandelt, verstärkt und über die Antenne (ATS) zu dem Satelliten abstrahlt;
vi) wenn das Signal TX1 auf die Zweigleitung R2 geleitet wird, das Signal in die Einheit (BUC) gelangt, welche es auf eine höhere Trägerfrequenz als diejenige des Signals TX1 umwandelt, verstärkt und über die Antenne (ATG) zu der Antenne AG abstrahlt;
vii) ein Signal RX2S, welches von dem Satelliten gesendet wird, von der Antenne (ATS) empfangen wird und in den Funkfrequenzblock (RFS) gelangt, welcher es verstärkt und auf eine niedrigere Trägerfrequenz als diejenige umwandelt, auf welcher das Signal RX2S empfangen wird, wodurch das Signal RX1S entsteht;
viii) das Signal RX1S in die Demodulatoreinheit (DEMS) gelangt, welche es in das Digitalsignal RXS umwandelt;
ix) das Signal RXS in die Decodier- und Formatiereinheit (DECS) gelangt, welche die Redundanzbits entfernt, die Bitfehlerrate (BERS) berechnet und diese an die an die Schaltsteuerungseinheit (CC2) übermittelt und eine Verschachtelungsoperation durchführen kann, bei welcher die Reihenfolge der Sendung der Bits, aus welchen das Signal zusammengesetzt ist, wiederhergestellt wird, wodurch das Signal RXdecS entsteht;
x) das Signal RXdecS über die Zweigleitung R4 in die Empfangs-Schalteinheit (RXCOM2) gelangt;
xi) ein Signal RX2G, welches von der Antenne AG gesendet wird, von der Antenne (ATG) empfangen wird und in die Einheit (LNB) gelangt, welche es verstärkt und auf eine niedrigere Trägerfrequenz als diejenige umwandelt, auf welcher das Signal RX2G empfangen wird, wodurch das Signal RX1G entsteht;
xii) das Signal RX1G in die optionale Leistungserfassungseinheit (RP) gelangt, welche seine Leistungsstärke ermittelt und es unverändert passieren lässt;
xiii) das Signal RX1G in die Demodulatoreinheit (DEMG) gelangt, welche es in das Digitalsignal RXG umwandelt;
xiv) das Signal RXG in die Decodier- und Formatiereinheit (DECG) gelangt, welche die Redundanzbits entfernt, die Bitfehlerrate (BERG) berechnet und diese an die an die Schaltsteuerungseinheit (CC2) übermittelt und eine Verschachtelungsoperation durchführen kann, bei welcher die Reihenfolge der Sendung der Bits, aus welchen das Signal zusammengesetzt ist, wiederhergestellt wird, wodurch das Signal RXdecG entsteht;
xv) das Signal RXdecG über die Zweigleitung R3 in die Empfangs-Schalteinheit (RXCOM2) gelangt;
xvi) das Signal RXdecS oder alternativ das Signal RXdecG gemäß dem Befehl, der von der Schaltsteuerungseinheit (CC2) empfangen wird, zum Ausgangszweig der Empfangs-Schalteinheit (RXCOM2) geleitet wird, wodurch das Signal RXdec entsteht.

2. Verfahren zum Umschalten zwischen einem Satellitensignal und einem Funksignal, das in Bereichen fehlender Sichtbarkeit verfügbar ist, und umgekehrt, basierend auf der Kommunikationsvorrichtung nach Anspruch 1, wobei das Verfahren die folgenden Operationen umfasst:
a) Auslesen der Leistungsstärke des Satellitensignals (LSS) aus dem Funkfrequenzblock (RFS);
b) Auslesen der Leistungsstärke des Funksignals im Bereich fehlender Sichtbarkeit (LSG) aus der Leistungsmesseinheit (RP);
c) Vergleichen der Leistungsstärke (LSS) mit einem voreingestellten Schwellenwert für das Satellitensignal (LSSsoglia);
d) wenn die Leistungsstärke (LSS) größer ist als der voreingestellte Schwellenwert (LSSsoglia):
i) Senden von Befehlen zum Aktivieren der Zweigleitung mit dem Satellitensignal und zum Deaktivieren der Zweigleitung mit dem Signal im Bereich fehlender Sichtbarkeit an die Empfangs-Schalteinheit (RXCOM1 oder RXCOM2);
ii) Senden von Befehlen zum Aktivieren der Zweigleitung mit dem Satellitensignal und zum Deaktivieren der Zweigleitung mit dem Signal im Bereich fehlender Sichtbarkeit an die Sende-Schalteinheit (TXCOM);
e) wenn die Leistungsstärke (LSS) kleiner oder gleich ist als/wie der voreingestellte Schwellenwert (LSSsoglia) :
i) Vergleichen der Leistungsstärke (LSG) mit einem voreingestellten Schwellenwert für das Signal im Bereich fehlender Sichtbarkeit (LSGsoglia);
f) wenn die Leistungsstärke des Signals im Bereich fehlender Sichtbarkeit (LSG) größer ist als der voreingestellte Schwellenwert für das Signal im Bereich fehlender Sichtbarkeit (LSGsoglia):
i) Senden von Befehlen zum Deaktivieren der Zweigleitung mit dem Satellitensignal und zum Aktivieren der Zweigleitung mit dem Signal im Bereich fehlender Sichtbarkeit an die Empfangs-Schalteinheit (RXCOM1 oder RXCOM2);
ii) Senden von Befehlen zum Deaktivieren der Zweigleitung mit dem Satellitensignal und zum Aktivieren der Zweigleitung mit dem Signal im Bereich fehlender Sichtbarkeit an die Sende-Schalteinheit (TXCOM);
g) wenn die Leistungsstärke des Signals im Bereich fehlender Sichtbarkeit (LSG) kleiner oder gleich ist als/wie der voreingestellte Schwellenwert für den Kanal im Bereich fehlender Sichtbarkeit (LSGsoglia) :
i) Senden von Befehlen zum Aktivieren der Zweigleitung mit dem Satellitensignal und zum Deaktivieren der Zweigleitung mit dem Signal im Bereich fehlender Sichtbarkeit an die Empfangs-Schalteinheit (RXCOM1 oder RXCOM2);
ii) Senden von Befehlen zum Aktivieren der Zweigleitung mit dem Satellitensignal und zum Deaktivieren der Zweigleitung mit dem Signal im Bereich fehlender Sichtbarkeit an die Sende-Schalteinheit (TXCOM).

3. Verfahren zum Umschalten zwischen einem Satellitensignal und einem Funksignal, das in Bereichen fehlender Sichtbarkeit verfügbar ist, und umgekehrt, basierend auf der Kommunikationsvorrichtung nach Anspruch 1, wobei das Verfahren die folgenden Operationen umfasst:
a) Auslesen des Wertes der Bitfehlerrate (BERS), die von der Vorrichtung (DECS) zum Decodieren und Formatieren des Signals, das auf dem Satellitenkanal vorliegt, berechnet wird;
b) Auslesen des Wertes der Bitfehlerrate (BERG), die von der Vorrichtung (DECG) zum Decodieren und Formatieren des Signals, das auf dem Funkkanal im Bereich fehlender Sichtbarkeit vorliegt, berechnet wird;
c) Vergleichen der Bitfehlerrate auf dem Satellitensignal (BERS) mit einem voreingestellten Schwellenwert für das Satellitensignal (BERSsoglia);
d) wenn die Bitfehlerrate auf dem Satellitensignal (BERS) kleiner ist als der voreingestellte Schwellenwert für das Satellitensignal (BERSsoglia) :
i) Senden von Befehlen zum Aktivieren der Zweigleitung mit dem Satellitensignal und zum Deaktivieren der Zweigleitung mit dem Signal im Bereich fehlender Sichtbarkeit an die Empfangs-Schalteinheit (RXCOM1 oder RXCOM2);
ii) Senden von Befehlen zum Aktivieren der Zweigleitung mit dem Satellitensignal und zum Deaktivieren der Zweigleitung mit dem Signal im Bereich fehlender Sichtbarkeit an die Sende-Schalteinheit (TXCOM);
e) wenn die Bitfehlerrate auf dem Satellitensignal (BERS) größer oder gleich ist als/wie der voreingestellte Schwellenwert für das Satellitensignal (BERSsoglia), Vergleichen der Bitfehlerrate auf dem Signal im Bereich fehlender Sichtbarkeit (BERG) mit einem voreingestellten Schwellenwert für das Signal im Bereich fehlender Sichtbarkeit (BERGsoglia);
f) wenn die Bitfehlerrate auf dem Signal im Bereich fehlender Sichtbarkeit (BERG) kleiner ist als der voreingestellte Schwellenwert für das Signal im Bereich fehlender Sichtbarkeit (BERGsoglia):
i) Senden von Befehlen zum Deaktivieren der Zweigleitung mit dem Satellitensignal und zum Aktivieren der Zweigleitung mit dem Signal im Bereich fehlender Sichtbarkeit an die Empfangs-Schalteinheit (RXCOM2);
ii) Senden von Befehlen zum Deaktivieren der Zweigleitung mit dem Satellitensignal und zum Aktivieren der Zweigleitung mit dem Signal im Bereich fehlender Sichtbarkeit an die Sende-Schalteinheit (TXCOM) ;
g) wenn die Bitfehlerrate auf dem Signal im Bereich fehlender Sichtbarkeit (BERG) größer oder gleich ist als/wie BERGsoglia:
i) Senden von Befehlen zum Aktivieren der Zweigleitung mit dem Satellitensignal und zum Deaktivieren der Zweigleitung mit dem Signal im Bereich fehlender Sichtbarkeit an die Empfangs-Schalteinheit (RXCOM2);
ii) Senden von Befehlen zum Aktivieren der Zweigleitung mit dem Satellitensignal und zum Deaktivieren der Zweigleitung mit dem Signal im Bereich fehlender Sichtbarkeit an die Sende-Schalteinheit (TXCOM).

4. Verfahren zum Verwalten der Trägerfrequenzen des Satellitenkanals und des Funksignals, das im Bereich fehlender Sichtbarkeit verfügbar ist, basierend auf dem System gemäß Anspruch 1, wobei das Verfahren die folgenden Operationen umfasst:
a) Umwandeln der N Trägerfrequenzen (FRA1, FRA2, ..., FRAN), auf welchen die Signale (RSA1, RSA2, ..., RSAN) von der Antenne ATG zu der Antenne AG gesendet werden, entsprechend in die Trägerfrequenzen (FRD1, FRD2, ..., FRDN), auf welchen die Signale (RSD1, RSD2, ..., RSDN) von der Satellitenantenne AE zu dem Satelliten gesendet werden, gemäß den Beziehungen FRA1 = FRD1 + FRfissata, FRA2 = FRD2 + FRfissata, ..., FRAN = FRDN + FRfissata, wobei FRfissata für eine konstante Größe steht;
b) Umwandeln der M Trägerfrequenzen (FFA1, FFA2, ..., FFAM), auf welchen die Signale (FSA1, FSA2, ..., FSAM) von dem Satelliten zu der Satellitenantenne AE gesendet werden, entsprechend in die Trägerfrequenzen (FFD1, FFD2, ..., FFDM), auf welchen die Signale (FSD1, FSD2, ..., FSDM) von der Antenne AG zu der Antenne ATG gesendet werden, gemäß den Beziehungen FFA1 = FFD1 + FFfissata, FFA2 = FFD2 + FFfissata, ..., FFAM = FFDM + FFfissata, wobei FFfissata für eine konstante Größe steht.

## Revendications

1. Système de liaison radio entre un satellite et un véhicule capable de maintenir la transmission et la réception de signaux même dans des zones de non-visibilité entre le satellite et le véhicule, comprenant :
- un appareil de communication constitué par :
a) une antenne émettrice-réceptrice interne à la zone de non-visibilité (AG) ;
b) un dispositif de réception de l'antenne AG (LNBG) ;
c) un dispositif de filtrage et d'égalisation (FER) ;
d) un dispositif transmettant le signal reçu par l'antenne AG à une antenne émettrice-réceptrice externe à la zone de non-visibilité (AE) (BUCS) ;
e) une antenne émettrice-réceptrice externe à la zone de non-visibilité (AE) ;
f) un dispositif recevant le signal reçu par l'antenne AE (LNBS) ;
g) un dispositif de filtrage (FF) ;
h) un dispositif transmettant le signal à l'antenne AG (BUCG) ;
dans lequel
i) une pluralité de signaux (RS11, RSA2, ..., RSAN) sont reçus par ladite antenne (AG) et entrent dans ledit dispositif de réception (LNBG) qui amplifie lesdits signaux et effectue une translation de leur porteuse RSB1, RSB2, ..., RSBN ;
ii) lesdits signaux RSB1, RSB2, ..., RSBN entrent dans ledit dispositif de filtrage et d'égalisation (FER) et sont démultiplexés en fréquence, égalisés en niveau et remultiplexés en fréquence en donnant de ce fait les signaux RSC1, RSC2, ..., RSCN ;
iii) lesdits signaux RSC1, RSC2, ..., RSCN entrent dans ledit dispositif de transmission (BUCS) qui les convertit en fréquence à des fréquences de porteuse supérieures et les amplifie, en donnant de ce fait les signaux RSD1, RSD2, ..., RSDN qui sont irradiés vers le satellite à travers ladite antenne externe (AE) ;
iv) un signal FSA provenant du satellite est reçu par ladite antenne externe (AE) et entre dans ledit dispositif de réception (LNBS) qui l'amplifie et le convertit en fréquence à une fréquence de porteuse inférieure, en donnant de ce fait le signal FSB ;
v) ledit signal FSB entre dans ledit dispositif de filtrage (FF) qui élimine les fréquences à l'extérieur de la plage d'intérêt, en donnant de ce fait le signal FSC ;
vi) ledit signal FSC entre dans le dispositif émetteur (BUCG) qui le convertit à une fréquence de porteuse supérieure et l'amplifie, en donnant de ce fait le signal FSB qui est irradié à l'intérieur de la zone de non-visibilité à travers ladite antenne (AG) ;
- un terminal mobile constitué soit par :
a) une première antenne d'émission et de réception (ATS) ;
b) une deuxième antenne d'émission et de réception (ATG) ;
c) un dispositif de commutation de transmission de signal analogique (TXCOM) ;
d) un dispositif de commutation de réception de signal analogique (RXCOM) ;
e) un dispositif de commande de commutation (CC1) ;
f) un dispositif de transmission du dispositif TXCOM à l'antenne ATG comprenant un amplificateur et un convertisseur de fréquence (BUC) ;
g) un bloc de transmission et de réception de radiofréquence vers l'antenne ATS (RFS) ;
h) un dispositif récepteur de l'antenne ATG au dispositif RXCOM1 comprenant un amplificateur de faible bruit et un convertisseur de fréquence (LNB) ;
i) un dispositif pour détecter la puissance du signal de sortie du dispositif LNB (RP) ;
dans lequel
i) un signal analogique TX1 capable d'être transmis par satellite ou par liaison radio dans la zone de non-visibilité entre dans ledit dispositif de commutation de transmission (TXCOM) qui l'achemine alternativement sur la branche R1 qui connecte ledit bloc de radiofréquence (RFS) ou sur la branche R2 qui connecte ledit dispositif émetteur (BUC) en fonction d'une commande reçue dudit dispositif de commande de commutation (CC1) ;
ii) ladite commande reçue dudit dispositif de commande de commutation (CC1) est établie en fonction d'informations de disponibilité et de qualité de signal reçues dudit bloc de radiofréquence (RFS) et dudit dispositif de mesure de puissance (RP) ;
iii) si ledit signal TX1 est acheminé sur la branche R1, ledit signal entre dans le bloc de radiofréquence (RFS) qui le convertit en fréquence à une fréquence de porteuse supérieure à celle dudit signal TX1, l'amplifie et l'irradie à travers ladite antenne (ATS) vers le satellite ;
iv) si ledit signal TX1 est acheminé sur la branche R2, ledit signal entre dans le dispositif (BUC) qui le convertit en fréquence à une fréquence de porteuse supérieure à celle dudit signal TX1, l'amplifie et l'irradie à travers ladite antenne (ATG) vers l'antenne AG ;
v) un signal RX2S transmis par le satellite est reçu par ladite antenne (ATS) et entre dans ledit bloc de radiofréquence (RFS) qui l'amplifie, détermine son niveau de puissance et le communique au dit dispositif de commande de commutation (CC1), et le convertit en fréquence à une fréquence de porteuse inférieure à celle sur laquelle ledit signal RX2S a été reçu, en donnant de ce fait le signal RX1S ;
vi) ledit signal RX1S entre à travers la branche R4 dans le dispositif de commutation de réception (RXCOM1) ;
vii) un signal RX2G transmis par l'antenne AG est reçu par l'antenne (ATG) et entre dans ledit dispositif (LNB) qui l'amplifie et le convertit en fréquence à une fréquence de porteuse inférieure à celle sur laquelle ledit signal RX2G a été reçu, en donnant de ce fait le signal RX1G ;
viii) ledit signal RX1G entre dans ledit dispositif de détection de puissance (RP) qui détermine son niveau de puissance, le communique au dit dispositif de commande de commutation (CC1), et le laisse passer sans altération ;
ix) ledit signal RX1G entre à travers la branche R3 dans le dispositif de commutation de réception (RXCOM1) ;
x) ledit signal RX1S ou, alternativement, ledit signal RX1G est acheminé sur la branche de sortie dudit dispositif de commutation de réception (RXCOM1) en fonction de la commande reçue dudit dispositif de commande de commutation (CC1), en donnant de ce fait le signal RX1 ;
ou alternativement constitué par :
a) une première antenne d'émission et de réception (ATS) ;
b) une deuxième antenne d'émission et de réception (ATG) ;
c) un dispositif de commutation de transmission de signal analogique (TXCOM) ;
d) un dispositif de commutation de réception de signal numérique (RXCOM2) ;
e) un dispositif de commande de commutation (CC1) ;
f) un dispositif modulateur (MOD) ;
g) un dispositif de transmission du dispositif TXCOM à l'antenne ATG comprenant un amplificateur et un convertisseur de fréquence (BUC) ;
h) un bloc de transmission et de réception de radiofréquence vers l'antenne ATS (RFS) ;
i) un dispositif de démodulation du signal provenant de l'antenne ATS (DEMS) ;
l) un dispositif récepteur de l'antenne ATG au dispositif RXCOM2 comprenant un amplificateur de faible bruit et un convertisseur de fréquence (LNB) ;
m) un dispositif pour détecter la puissance du signal de sortie du dispositif LNB (RP) ;
n) un dispositif pour démoduler le signal provenant de l'antenne ATG (DEMG) ;
dans lequel
i) un signal numérique TX entre dans ledit dispositif modulateur qui le transforme en un signal analogique TX1 capable d'être transmis par satellite ou par liaison radio dans la zone de non-visibilité ;
ii) ledit signal TX1 entre dans ledit dispositif de commutation de transmission (TXCOM) qui l'achemine alternativement sur la branche R1 qui connecte ledit bloc de radiofréquence (RFS) ou sur la branche R2 qui connecte ledit dispositif émetteur (BUC) en fonction d'une commande reçue dudit dispositif de commande de commutation (CC1) ;
iii) ladite commande reçue dudit dispositif de commande de commutation (CC1) est établie en fonction d'informations de disponibilité et de qualité de signal reçues dudit bloc de radiofréquence (RFS) et dudit dispositif de mesure de puissance (RP) ;
iv) si ledit signal TX1 est acheminé sur la branche R1, ledit signal entre dans le bloc de radiofréquence (RFS) qui le convertit en fréquence à une fréquence de porteuse supérieure à celle dudit signal TX1, l'amplifie et l'irradie à travers ladite antenne (ATS) vers le satellite ;
v) si ledit signal TX1 est acheminé sur la branche R2, ledit signal entre dans le dispositif (BUC) qui le convertit en fréquence à une fréquence de porteuse supérieure à celle dudit signal TX1, l'amplifie et l'irradie à travers ladite antenne (ATG) vers l'antenne AG ;
vi) un signal RX2S transmis par le satellite est reçu par ladite antenne (ATS) et entre dans ledit bloc de radiofréquence (RFS) qui l'amplifie, détermine son niveau de puissance et le communique au dit dispositif de commande de commutation (CC1), et le convertit en fréquence à une fréquence de porteuse inférieure à celle sur laquelle ledit signal RX2S a été reçu, en donnant de ce fait le signal RX1S ;
vii) ledit signal RX1S entre dans le dispositif de démodulation (DEMS) qui le transforme en signal numérique RXS ;
viii) ledit signal RXS entre à travers la branche R4 dans le dispositif de commutation de réception (RXCOM2) ;
ix) un signal RX2G transmis par l'antenne AG est reçu par l'antenne (ATG) et entre dans ledit dispositif (LNB) qui l'amplifie et le convertit en fréquence à une fréquence de porteuse inférieure à celle sur laquelle ledit signal RX2G a été reçu, en donnant de ce fait le signal RX1G ;
x) ledit signal RX1G entre dans ledit dispositif de détection de puissance (RP) qui détermine son niveau de puissance, le communique au dit dispositif de commande de commutation (CC1), et le laisse passer sans altération ;
xi) ledit signal RX1G entre dans le dispositif de démodulation (DEMG) qui le transforme en signal numérique RXG ;
xii) ledit signal RXG entre à travers la branche R3 dans le dispositif de commutation de réception (RXCOM2) ;
xiii) ledit signal RXS ou, alternativement, ledit signal RXG est acheminé sur la branche de sortie dudit dispositif de commutation de réception (RXCOM2) en fonction de la commande reçue dudit dispositif de commande de commutation (CC1), en donnant de ce fait le signal RX ;
ou, alternativement constitué par :
a) une première antenne d'émission et de réception (ATS) ;
b) une deuxième antenne d'émission et de réception (ATG) ;
c) un dispositif de commutation de transmission de signal analogique (TXCOM) ;
d) un dispositif de commutation de réception de signal numérique (RXCOM2) ;
e) un dispositif de commande de commutation (CC2) ;
f) un dispositif de formatage et de codage (COD) ;
g) un dispositif modulateur (MOD) ;
h) un dispositif de transmission du dispositif TXCOM à l'antenne ATG comprenant un amplificateur et un convertisseur de fréquence (BUC) ;
i) un bloc de transmission et de réception de radiofréquence vers l'antenne ATS (RFS) ;
l) un dispositif de démodulation du signal provenant de l'antenne ATS (DEMS) ;
m) un dispositif de décodage et de formatage du signal provenant de l'antenne ATS (DECS) ;
n) un dispositif récepteur de l'antenne ATG au dispositif RXCOM2 comprenant un amplificateur de faible bruit et un convertisseur de fréquence (LNB) ;
o) un dispositif optique pour détecter la puissance du signal de sortie du dispositif LNB (RP) ;
p) un dispositif pour démoduler le signal provenant de l'antenne ATG (DEMG) ;
q) un dispositif de décodage et de formatage du signal provenant de l'antenne ATG (DECG) ;
dans lequel
i) un signal numérique TXdec entre dans ledit dispositif de formatage et de codage (COD) qui ajoute des bits redondants et peut effectuer une opération d'entrelacement dans laquelle l'ordre de transmission des bits comprenant le signal entrant redondant est altéré, en donnant de ce fait le signal TX ;
ii) ledit signal numérique TX entre dans ledit dispositif modulateur (MOD) qui le transforme en un signal analogique TX1 capable d'être transmis par satellite ou par liaison radio dans la zone de non-visibilité ;
iii) ledit signal TX1 entre dans ledit dispositif de commutation de transmission (TXCOM) qui l'achemine alternativement sur la branche R1 qui connecte ledit bloc de radiofréquence (RFS) ou sur la branche R2 qui connecte ledit dispositif émetteur (BUC) en fonction d'une commande reçue dudit dispositif de commande de commutation (CC2) ;
iv) ladite commande reçue dudit dispositif de commande de commutation (CC2) est établie en fonction d'informations de taux d'erreur binaire reçues dudit dispositif de décodage et de formatage du signal provenant de l'antenne ATS (DECS) et dudit dispositif de décodage et de formatage du signal provenant de l'antenne ATG (DECG) ;
v) si ledit signal TX1 est acheminé sur la branche R1, ledit signal entre dans le bloc de radiofréquence (RFS) qui le convertit en fréquence à une fréquence de porteuse supérieure à celle dudit signal TX1, l'amplifie et l'irradie à travers ladite antenne (ATS) vers le satellite ;
vi) si ledit signal TX1 est acheminé sur la branche R2, ledit signal entre dans le dispositif (BUC) qui le convertit en fréquence à une fréquence de porteuse supérieure à celle dudit signal TX1, l'amplifie et l'irradie à travers ladite antenne (ATG) vers l'antenne AG ;
vii) un signal RX2S transmis par le satellite est reçu par ladite antenne (ATS) et entre dans ledit bloc de radiofréquence (RFS) qui l'amplifie et le convertit en fréquence à une fréquence de porteuse inférieure à celle sur laquelle ledit signal RX2S a été reçu, en donnant de ce fait le signal RX1S ;
viii) ledit signal RX1S entre dans le dispositif de démodulation (DEMS) qui le transforme en signal numérique RXS ;
ix) ledit signal RXS entre dans le dispositif de décodage et de formatage (DECS) qui enlève les bits de redondance, calcule le taux d'erreur binaire (BERS) et le communique au dit dispositif de commande de commutation (CC2), et peut effectuer une opération d'entrelacement dans laquelle l'ordre de transmission des bits composant ledit signal est restauré, en donnant de ce fait le signal RXdecS ;
x) ledit signal RXdecS entre à travers la branche R4 dans le dispositif de commutation de réception (RXCOM2) ;
xi) un signal RX2G transmis par l'antenne AG est reçu par l'antenne (ATG) et entre dans ledit dispositif (LNB) qui l'amplifie et le convertit en fréquence à une fréquence de porteuse inférieure à celle sur laquelle ledit signal RX2G a été reçu, en donnant de ce fait le signal RX1G ;
xii) ledit signal RX1G entre dans ledit dispositif de détection de puissance optionnel (RP) qui détermine son niveau de puissance et le laisse passer sans altération ;
xiii) ledit signal RX1G entre dans le dispositif de démodulation (DEMG) qui le transforme en signal numérique RXG ;
xiv) ledit signal RXG entre dans le dispositif de décodage et de formatage (DECS) qui enlève les bits de redondance, calcule le taux d'erreur binaire (BERS) et le communique au dit dispositif de commande de commutation (CC2), et peut effectuer une opération d'entrelacement dans laquelle l'ordre de transmission des bits composant ledit signal est restauré, en donnant de ce fait le signal RXdecG ;
xv) ledit signal RXdecG entre à travers la branche R3 dans le dispositif de commutation de réception (RXCOM2) ;
xvi) ledit signal RXdecS ou, alternativement, ledit signal RXdecG est acheminé sur la branche de sortie dudit dispositif de commutation de réception (RXCOM2) en fonction de la commande reçue dudit dispositif de commande de commutation (CC2), en donnant de ce fait le signal RXdec.

2. Procédé de commutation entre un signal satellite et un signal radio disponible dans des zones de non-visibilité, et vice versa, basé sur l'appareil de communication selon la revendication 1, comprenant les opérations suivantes :
a) lire le niveau de puissance du signal satellite (LSS) du bloc de radiofréquence (RFS) ;
b) lire le niveau de puissance du signal radio dans une zone de non-visibilité (LSG) du dispositif de mesure de puissance (RP) ;
c) comparer ledit niveau de puissance (LSS) à un niveau de seuil préréglé pour le signal satellite (LSSsoglia) ;
d) si ledit niveau de puissance (LSS) est supérieur au dit niveau de seuil préréglé (LSSsoglia) :
i) envoyer au dispositif de commutation de réception (RXCOM1 ou RXCOM2) des commandes pour activer la branche avec le signal satellite et désactiver la branche avec le signal en zone de non-visibilité ;
ii) envoyer au dispositif de commutation de transmission (TXCOM) des commandes pour activer la branche avec le signal satellite et désactiver la branche avec le signal en zone de non-visibilité ;
e) si ledit niveau de puissance (LSS) est inférieur ou égal au dit niveau de seuil préréglé (LSSsoglia) :
i) comparer ledit niveau de puissance (LSS) à un niveau de seuil préréglé pour le signal en zone de non-visibilité (LSGsoglia) ;
f) si ledit niveau de puissance du signal en zone de non-visibilité (LSG) est supérieur au dit niveau de seuil préréglé pour le signal en zone de non-visibilité (LSGsoglia) :
i) envoyer au dispositif de commutation de réception (RXCOM1 ou RXCOM2) des commandes pour désactiver la branche avec le signal satellite et activer la branche avec le signal en zone de non-visibilité ;
ii) envoyer au dispositif de commutation de transmission (TXCOM) des commandes pour désactiver la branche avec le signal satellite et activer la branche avec le signal en zone de non-visibilité ;
g) si ledit niveau de puissance du signal en zone de non-visibilité (LSG) est inférieur ou égal au dit niveau de seuil préréglé pour le signal en zone de non-visibilité (LSGsoglia) :
i) envoyer au dispositif de commutation de réception (RXCOM1 ou RXCOM2) des commandes pour activer la branche avec le signal satellite et désactiver la branche avec le signal en zone de non-visibilité ;
ii) envoyer au dispositif de commutation de transmission (TXCOM) des commandes pour activer la branche avec le signal satellite et désactiver la branche avec le signal en zone de non-visibilité.

3. Procédé de commutation entre un signal satellite et un signal radio disponible dans des zones de non-visibilité, et vice versa, basé sur l'appareil de communication selon la revendication 1, comprenant les opérations suivantes :
a) lire la valeur du taux d'erreur binaire (BERS) calculé par ledit dispositif (DECS) de décodage et de formatage du signal numérique présent sur le canal satellite ;
b) lire la valeur du taux d'erreur binaire (BERG) calculé par ledit dispositif (DECG) de décodage et de formatage du signal numérique présent sur le canal radio en zone de non-visibilité ;
c) comparer ledit taux d'erreur binaire sur le signal satellite (BERS) à un niveau de seuil préréglé pour le signal satellite (BERSsoglia) ;
d) si ledit taux d'erreur binaire sur le signal satellite (BERS) est inférieur au dit niveau de seuil préréglé pour le signal satellite (BERSsoglia) :
i) envoyer au dispositif de commutation de réception (RXCOM1 ou RXCOM2) des commandes pour activer la branche avec le signal satellite et désactiver la branche avec le signal en zone de non-visibilité ;
ii) envoyer au dispositif de commutation de transmission (TXCOM) des commandes pour activer la branche avec le signal satellite et désactiver la branche avec le signal en zone de non-visibilité ;
e) si ledit taux d'erreur binaire sur le signal satellite (BERS) est supérieur ou égal au dit niveau de seuil préréglé pour le signal satellite (BERSsoglia), comparer ledit taux d'erreur binaire sur le signal en zone de non-visibilité (BERG) à un niveau de seuil préréglé pour le signal en zone de non-visibilité (BERGsoglia) ;
f) si ledit taux d'erreur binaire sur le signal en zone de non-visibilité (BERG) est inférieur au dit niveau de seuil préréglé pour le signal en zone de non-visibilité (BERGsoglia) :
i) envoyer au dispositif de commutation de réception (RXCOM2) des commandes pour désactiver la branche avec le signal satellite et activer la branche avec le signal en zone de non-visibilité ;
ii) envoyer au dispositif de commutation de transmission (TXCOM) des commandes pour désactiver la branche avec le signal satellite et activer la branche avec le signal en zone de non-visibilité ;
g) si ledit taux d'erreur binaire sur le signal en zone de non-visibilité (BERG) est supérieur ou égal au BERGsoglia :
i) envoyer au dispositif de commutation de réception (RXCOM2) des commandes pour activer la branche avec le signal satellite et désactiver la branche avec le signal en zone de non-visibilité ;
ii) envoyer au dispositif de commutation de transmission (TXCOM) des commandes pour activer la branche avec le signal satellite et désactiver la branche avec le signal en zone de non-visibilité.

4. Procédé pour gérer les fréquences de porteuse du canal satellite et du signal radio disponible en zone de non-visibilité basé sur le système selon la revendication 1, comprenant les opérations suivantes :
a) convertir les N fréquences de porteuse (FRAI, FRA2, ..., FRAN) sur lesquelles les signaux (RSA1, RSA2, ..., RSAN) sont transmis de l'antenne ATG à l'antenne AG, respectivement en fréquences de porteuse (FRD1, FRD2, ..., FRDN) sur lesquelles sont transmis les signaux (RSD1, RSD2, ..., RSDN) de l'antenne satellite AE au satellite selon les relations FRA1 = FRD1 + FRfissata, FRA2 = FRD2 + FRfissata, ..., FRAN = FRDN + FRfissata, où FRfissata indique une quantité constante ;
b) convertir les M fréquences de porteuse (FFA1, FFA2, ..., FFAM) sur lesquelles les signaux (FSA1, FSA2, ..., FSAM) sont transmis du satellite à l'antenne satellite AE, respectivement en fréquences de porteuse (FFD1, FFD2, ..., FFDM) sur lesquelles sont transmis les signaux (FSD1, FSD2, ..., FSDM) de l'antenne AG à l'antenne ATG selon les relations FFA1 = FFD1 + FFfissata, FFA2 = FFD2 + FFfissata, ..., FFAM = FFDM + FFfissata, où FFfissata indique une quantité constante.
